# EUROPEAN PATENT SPECIFICATION

(11) **EP 1 681 539 B1**
(45) Date of publication and mention of the grant of the patent: **03.06.2009**
(21) Application number: 05112802.3
(22) Date of filing: 22.12.2005
(51) Int. Cl.: G01C 21/34, H04L 12/56

(54) **Computing point-to-point shortest paths from external memory**
Berechnung der kürzesten Punkt-zu-Punkt-Pfade von einem externen Speicher
Calcul des trajets point à point les plus courts à partir d'une mémoire externe

(30) Priority: 18.01.2005 US 644963 P; 27.04.2005 US 115558
(43) Date of publication of application: 19.07.2006
(73) Proprietor: MICROSOFT CORPORATION, Redmond, WA 98052 (US)
(72) Inventor: Goldberg, Andrew V., Redmond, WA Washington 98052 (US); Werneck, Renato, Redmond, WA Washington 98052 (US)
(74) Representative: Grünecker, Kinkeldey, Stockmair & Schwanhäusser Anwaltssozietät

(56) References cited:
- US-A1- 2001 029 425
- US-A1- 2003 161 268
- US-A1- 2004 236 811
- AL-HASAN S ET AL: "Intelligent route planning for fast autonomous vehicles operating in a large natural terrain" ROBOTICS AND AUTONOMOUS SYSTEMS, ELSEVIER SCIENCE PUBLISHERS, AMSTERDAM, NL, vol. 40, no. 1, 31 July 2002 (2002-07-31), pages 1-24, XP004367251 ISSN: 0921-8890

## Description

### CROSS REFERENCE TO RELATED APPLICATIONS

This application is a continuation-in-part of U.S. patent application serial number 10/925,751, filed August 25, 2004 and also claims the benefit of U.S. provisional patent application serial number 60/644,963, filed January 18, 2005.

### FIELD OF THE INVENTION

The present invention relates generally to the field of routing, and, more particularly, to determining a best route between two points on a computerized map.

### BACKGROUND OF THE INVENTION

Existing computer programs known as "road-mapping" programs provide digital maps, often complete with detailed road networks down to the city-street level. Typically, a user can input a location and the road-mapping program will display an on-screen map of the selected location. Several existing road-mapping products typically include the ability to calculate a "best route" between two locations. In other words, the user can input two locations, and the road-mapping program will compute the travel directions from the source location to the destination location. The directions are typically based on distance, travel time, and certain user preferences, such as a speed at which the user likes to drive, or the degree of scenery along the route. Computing the best-route between locations may require significant computational time and resources.

Existing road-mapping programs employ variants of a method attributed to E. Dijkstra to compute shortest paths. Dijkstra's method is described by Cormen, Leiserson and Rivest in Introduction to Algorithms, MIT Press, 1990, pp. 514-531, which is hereby incorporated by reference in its entirety for all that it teaches without exclusion of any part thereof. Note that in this sense "shortest" means "least cost" because each road segment is assigned a cost or weight not necessarily directly related to the road segment's length. By varying the way the cost is calculated for each road, shortest paths can be generated for the quickest, shortest, or preferred routes.

Dijkstra's original method, however, is not always efficient in practice, due to the large number of locations and possible paths that are scanned. Instead, many modem road-mapping programs use heuristic variations of Dijkstra's method, including A* search (a.k.a. heuristic or goal-directed search) in order to "guide" the shortest-path computation in the right general direction. Such heuristic variations typically involve estimating the weights of paths between intermediate locations and the destination. A good estimate reduces the number of locations and road segments that must be considered by the road-mapping program, resulting in a faster computation of shortest paths; a bad estimate can have the opposite effect, and increase the overall time required to compute shortest paths. If the estimate is a lower-bound on distances with certain properties, A* search computes the optimal (shortest) path. The closer these lower-bounds are to the actual path weights, the better the estimation and the algorithm performance. Lower-bounds that are very close to the actual values being bound are said to be "good." Previously known heuristic variations use lower-bound estimation techniques such as Euclidean distance (i.e., "as the crow flies") between locations, which are not very good.

Application serial number 10/925,751, filed August 25, 2004, entitled "Efficiently Finding Shortest Paths Using Landmarks For Computing Lower-Bound Distance Estimates" describes an algorithm based on triangle inequalities to determine shortest paths. It would be desirable to provide dynamic selection of active landmarks, and provide memory efficiencies for use in path computation techniques, systems, and the like. It would also be desirable to use tree-based heuristics and the use of a local search in generating landmarks.

Al-Hasan S. et al. ("Intelligent route planning for fast autonomous vehicles operating in a large natural terrain", Robotics and Autonomous Systems, Elsevier Science Publishers, Amsterdam, NL, Vol. 40, No. 1, pages 1 - 24) is directed to intelligent route planning for fast autonomous vehicles operating in a large natural terrain. A terrain map is divided into uniform or non-uniform cells where some cells are occupied by obstacles while the remaining are obstacle-free. Assuming that the map of a terrain is represented by a mesh of equal square cells, the search engine employs an A* algorithm to search the map cells and plan a route from the start cell to the destination cell. A learning algorithm collects and stores routes' costs at some map landmarks and re-uses those costs to provide better heuristics to the search engine.

### SUMMARY OF THE INVENTION

The following summary provides an overview of various aspects of the invention. It is not intended to provide an exhaustive description of all of the important aspects of the invention, or to define the scope of the invention. Rather, this summary is intended to serve as an introduction to the detailed description and figures that follow.

The present invention is directed to solving the point-to-point shortest path problem on directed graphs with nonnegative arc lengths (the P2P problem). It is desirable to find exact shortest paths. Unlike the single-source case, where every vertex of the graph must be visited in order to solve the problem, the P2P problem can be solved while visiting a small subgraph. Visiting a small portion of the graph not only improves the running time of the process, but allows for an external memory implementation. An example embodiment keeps the graph and preprocessing data in secondary storage (e.g., disk or flash memory) and the data used for the visited portion of the graph in main memory (e.g., RAM). This approach is desirable because some applications work on large graphs, run on small devices (e.g., mobile or handheld devices), or both.

According to aspects of the invention, landmarks may be generated or selected during pre-processing using one or more selection heuristics, such as using tree-based heuristics and using a local search.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Figure 1 is a simplified schematic illustrating an exemplary architecture of a computing environment on which shortest paths can be calculated, in accordance with an embodiment of the invention;

Figure 2 is a diagram illustrating an arrangement of computing devices on a computing network, in accordance with an embodiment of the invention;

Figure 3 is a diagram illustrating a graph representation of interconnected locations, in accordance with an embodiment of the invention;

Figure 4 is a diagram illustrating locations scanned by a shortest path searching method;

Figure 5 is a diagram illustrating locations scanned by a heuristic shortest path searching method, in accordance with an embodiment of the invention;

Figure 6 is a flow diagram illustrating a method for finding the shortest path between two locations, in accordance with an embodiment of the invention;

Figure 7 is a flow diagram illustrating a method for estimating distances to a destination location using landmarks, in accordance with an embodiment of the invention;

Figure 8 is a diagram illustrating an exemplary set of locations and a landmark;

Figure 9 is a flowchart of an example method of selecting active landmarks dynamically, in accordance with the present invention;

Figure 10 is a flowchart of an example landmark selection method in accordance with the present invention; and

Figure 11 is a flowchart of another example landmark selection method in accordance with the present invention.

### DETAILED DESCRIPTION OF ILLUSTRATIVE EMBODIMENTS

The subject matter is described with specificity to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the term "step" may be used herein to connote different elements of methods employed, the term should not be interpreted as implying any particular order among or between various steps herein disclosed unless and except when the order of individual steps is explicitly described.

The present invention will be more completely understood through the following detailed description, which should be read in conjunction with the attached drawings. In this description, like numbers refer to similar elements within various embodiments of the present invention. The invention is illustrated as being implemented in a suitable computing environment. Although not required, the invention will be described in the general context of computer-executable instructions, such as procedures, being executed by a personal computer. Generally, procedures include program modules, routines, functions, programs, objects, components, data structures, etc. that perform particular tasks or implement particular abstract data types. Moreover, those skilled in the art will appreciate that the invention may be practiced with other computer system configurations, including handheld devices, multi-processor systems, microprocessor based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices. The term computer system may be used to refer to a system of computers such as may be found in a distributed computing environment.

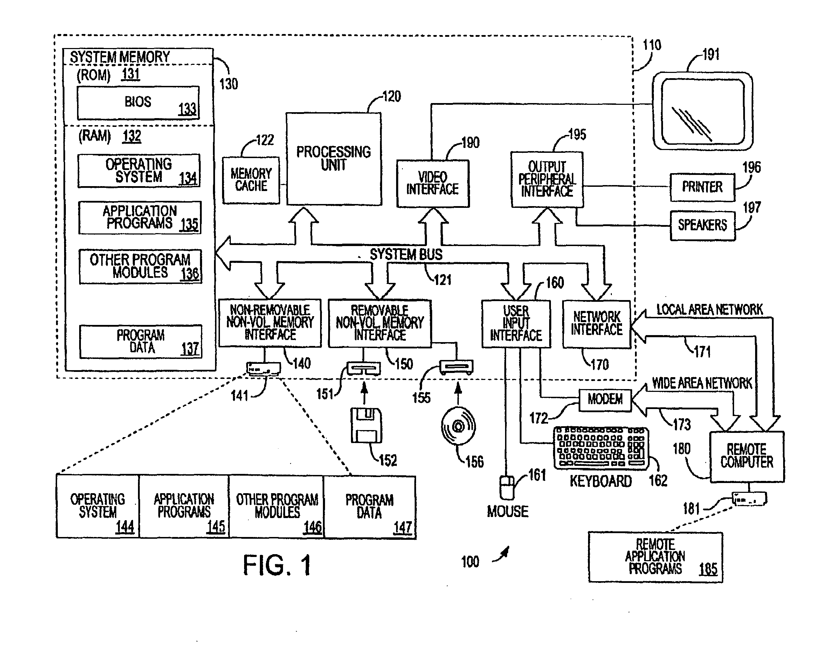

Figure 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100. Although one embodiment of the invention does include each component illustrated in the exemplary operating environment 100, another more typical embodiment of the invention excludes non-essential components, for example, input/output devices other than those required for network communications.

With reference to Figure 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Additionally, components of the computer 110 may include a memory cache 122. The processing unit 120 may access data from the memory cache more quickly than from the system memory 130. The memory cache 122 typically stores the data most recently accessed from the system memory 130 or most recently processed by the processing unit 120. The processing unit 120, prior to retrieving data from the system memory 130, may check if that data is currently stored in the memory cache 122. If so, a "cache hit" results and the data is retrieved from the memory cache 122 rather than from the generally slower system memory 130.

The computer 110 typically includes a variety of computer readable media. Computer readable media can be any available media that can be accessed by the computer 110 and includes both volatile and nonvolatile media, and removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by the computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136 and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers hereto illustrate that, at a minimum, they are different copies. A user may enter commands and information into the computer 110 through input devices such as a tablet, or electronic digitizer, 164, a microphone 163, a keyboard 162 and pointing device 161, commonly referred to as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 197 and printer 196, which may be connected through an output peripheral interface 195 or the like.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets and the Internet. For example, in the present invention, the computer 110 may comprise the source machine from which data is being migrated, and the remote computer 180 may comprise the destination machine. Note however that source and destination machines need not be connected by a network or any other means, but instead, data may be migrated via any media capable of being written by the source platform and read by the destination platform or platforms.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

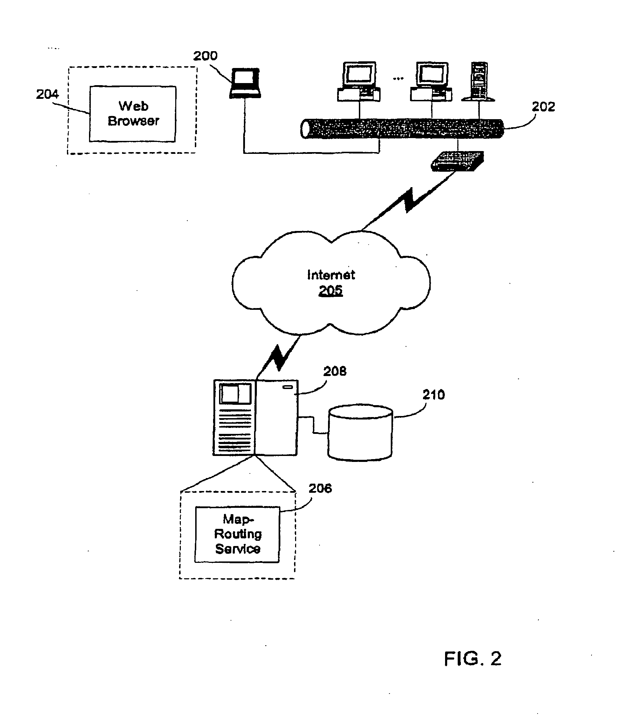

Turning to Figure 2, a simple example of a computing environment is depicted wherein the invention is potentially exploited. In the illustrative environment, a computing device 200 includes a network interface card (not specifically shown) facilitating communications over a communications medium. In the particular example depicted in Figure 2, the computing device 200 communicates with a local area network 202 via physical connection. Alternatively, the computing device 200 could communicate with the local area network 202 via WWAN or WLAN media, or via other communications media. The user of the computing device 200, as a result of the supported network medium, is able to access network resources, typically through the use of a browser application 204 running on the computing device 200. The browser application 204 facilitates communication with a remote network over, for example, the Internet 205. One exemplary network resource is a map-routing service 206, running on a map-routing server 208. The map routing server 208 hosts a database 210 of physical locations and street addresses, along with routing information such as adjacencies, distances, speed limits, and other relationships between the stored locations. A user of the computing device 200 typically enters start and destination locations as a request through the browser application 204. The map-routing server 208 receives the requests and produces an optimal route among the locations stored in the database 210 for reaching the destination location from the start location. The map-routing server 208 then sends that optimal route back to the requesting computing device 200. Alternatively, the map-routing service 208 is hosted on the computing device 200, and the computing device 200 need not communicate with a local area network 202.

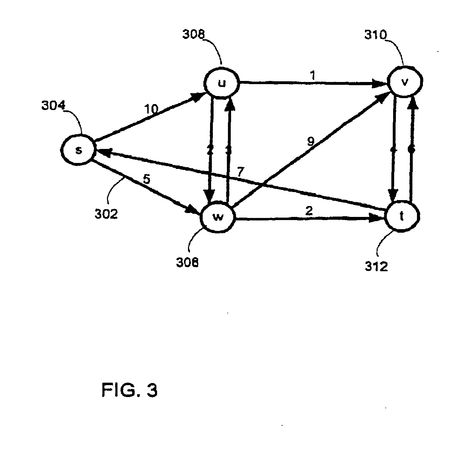

Computing the optimal route, however, is not a trivial task. To visualize and implement routing methods, it is helpful to represent locations and connecting segments as an abstract graph with vertices and directed edges. Vertices correspond to locations, and edges correspond to road segments between locations. The edges are preferably weighted according to the travel distance, speed limit, and/or other criteria about the corresponding road segment. The general terms "length" and "distance" are used in context to encompass the metric by which an edge's weight or cost is measured. The length or distance of a path is the sum of the weights of the edges contained in the path. For example, in the graph of Figure 3, edge (s, w) 302 going from vertex s 304 to vertex w 306 has length 5. The length of the path from s 304 to u 308 to v 310 to t 312 is 10 + 1 + 4 = 15. A shorter path from s 302 to t 312 is via w 306, and is of length 7. For manipulation by computing devices, graphs may be stored preferably in a contiguous block of computer memory as a collection of records, each record representing a single graph node or edge along with associated data.

One approach to computing the optimal route is to use the method ofDijkstra. In general, Dijkstra's method finds the shortest path from a single "source" vertex to all other vertices in the graph by maintaining for each vertex a distance label and a flag indicating if the vertex has yet been scanned. The distance label is initially set to infinity for each vertex, and represents the weight of the shortest path from the source to that vertex using only those vertices that have already been scanned. The method picks an unscanned vertex and relaxes all edges coming out of the vertex (i.e., leading to adjacent vertices). The straightforward implementation of Dijkstra's method chooses for scanning the unscanned vertex with the lowest distance label. To relax an edge (v, w), the method checks if the labeled distance for w is greater than the sum of the labeled distance for v and the actual weight of the edge (v, w). If so, the method updates the distance label for w to equal that sum. It can be mathematically shown that once a vertex has been scanned, its distance label does not subsequently change. Some implementations further maintain a parent label for each scanned vertex w, indicating the vertex v whose outgoing edge leads to w on the shortest path. When the method is about to scan a vertex, the path defined by the parent pointers for that vertex is a shortest path.

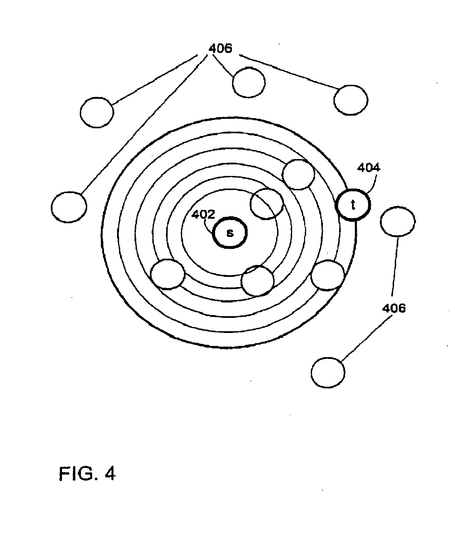

Although Dijkstra's method can be used to compute shortest paths from a source to all other vertices, it can also be used to find a shortest path from a source to a single destination vertex - the method simply terminates when the destination vertex is about to be scanned. Intuitively, Dijkstra's method searches within a circle, the source vertex in the center, increasing the radius of the circle by choosing vertices and scanning them. If a path is sought for a particular destination, the method terminates with the destination on the boundary of the circle. As illustrated in Figure 4, searching for a shortest path from vertex s 402 to vertex t 404 via Dijkstra's method results in scanning possible vertices in increasing order of their distance from s 402. The shortest path to any vertex only passes through vertices that have already been scanned. Once the distance and shortest path to vertex t 404 have been determined, the method stops, leaving those vertices 406 who are further distance than t 404 from s 402 unscanned. At this point, in the traditional Dijkstra method, all those vertices 408 who are closer distance than t 404 from s 402 have already been scanned.

As previously noted, Dijkstra's original method is not always efficient in practice to find a shortest path from a source to a particular destination, due to the large number of locations and possible paths that are scanned. Instead, A* searches may be used in order to guide the shortest-path computation in the right general direction, thereby reducing the number of vertices scanned en route. The A* search operates similarly to the above-described method of Dijkstra, but additionally maintains an estimate for each vertex. The estimate is typically a lower-bound on the actual weight of a path from that vertex to the destination. To choose a labeled vertex for scanning, the A* search chooses the unscanned vertex whose sum of labeled distance and estimate is minimal. The rest of Dijkstra's method remains the same. The set of estimates over the vertices form a "potential" function with respect to the destination, and the potential of a vertex is the estimate of the weight of the shortest path from the vertex to the destination.

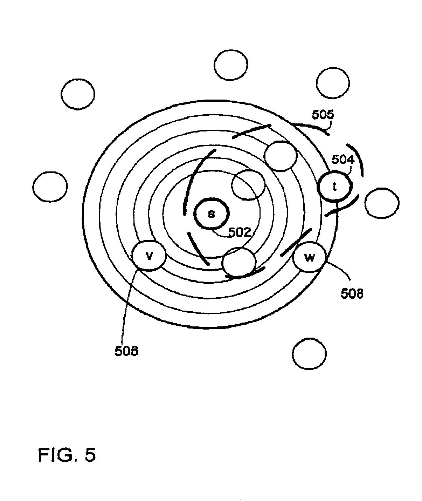

In order to mathematically guarantee accurate results, heuristic variations may generally use "feasible" estimates (i.e., for an edge from v to w, the estimate for v minus the estimate for w is not more than the actual weight of the edge). The closer these lower-bounds are to the actual path weights, the better the estimation. An example is shown in Figure 5, where estimates have been used to guide the heuristic search from s 502 to t 504. The set of vertices 505 scanned by the heuristic search are those whose estimated distance to t 504 plus actual distance from s 504 is minimal. The exemplary heuristic search has saved the scanning of vertices v 506 and w 508, which would otherwise have been scanned in a straightforward application ofDijkstra's method.

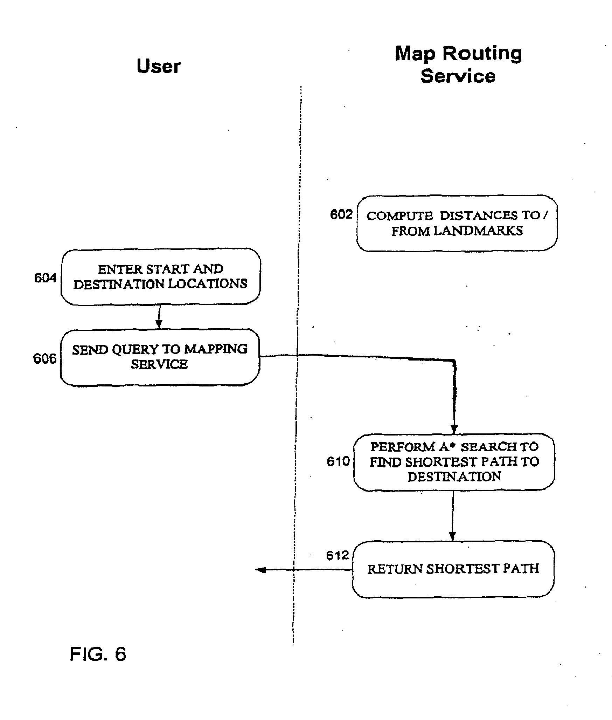

A common technique employed by previous lower-bounding implementations uses information implicit in the domain, like Euclidean distances for Euclidean graphs, to compute lower bounds. Embodiments of the present invention instead select a small set of "landmarks" and for all vertices pre-compute distances to and from every landmark. An example technique is now described with reference to Figure 6. Actual distances to and from each landmark in the set are computed for each location (i.e., vertex in the corresponding graph) in a pre-processing step 602. A user enters start and destination locations at step 604, and the query is sent to a mapping service at step 606. The mapping service performs an A* search to find the shortest path to the destination from the source at step 610 using landmarks to compute lower bounds when needed by the search. The mapping service returns the shortest path to the user at step 612.

Distances to and from landmarks may be used to compute lower-bound estimates on distances to the destination. Distances satisfy the "triangle inequality" (i.e., the distance from any vertex u to another vertex w is not greater than the sum of the distances from u to any intermediate vertex v and from v to w), which can be used with the landmarks to produce good lower bounds as follows: Consider a landmark L. Then by the triangle inequality, the distance from u to L minus the distance from v to L is not greater than the distance from u to v. Similarly, using distances from L, then the distance from L to v minus the distance from L to u is not greater than the distance from u to v.

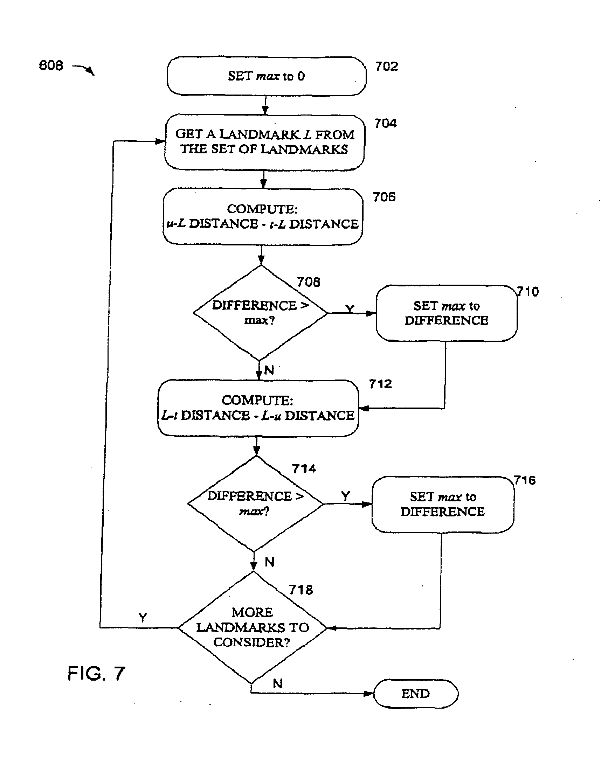

Turning to Figure 7, a method is described for using distances to and from landmarks to compute tight lower-bound estimates for a given destination t, in accordance with embodiments of the invention. The method computes tight lower bounds on the distance from a given vertex u to t by maintaining a max value, initially set to 0 at step 702. A landmark is selected from the set of landmarks at step 704. At step 706, the method computes the difference between the distance from u to L and the distance from t to L, and compares this difference to max at step 708. If it is larger than max, then max is updated with this value at step 710. The method then computes the difference between the distance from L to t and from L to u at step 712 and compares this difference to max at step 714. If it is larger than max, then max is updated with this value at step 716. The method checks if more landmarks are to be considered at step 718. If so, another landmark is chosen by returning to step 704. Otherwise, the method ends, and max is used as the estimated distance from u to t. The method may be repeated for each vertex in the graph.

Because the distances to and from L are pre-computed, each difference is calculated in constant time (i.e., a fixed amount of computations, not relative to the size of the input), and the maximum difference for each vertex u can also be found in constant time if a constant number of landmarks are used.

Embodiments of the invention may not use all of the landmarks. This may be more efficient, since fewer computations are necessary. For a given source and destination, embodiments of the invention select a subset of landmarks that give the highest lower bounds on the distance from source to destination. The shortest path computation is then limited to this subset when computing lower bounds. The subset can be static or dynamic, i.e., updated during the computation.

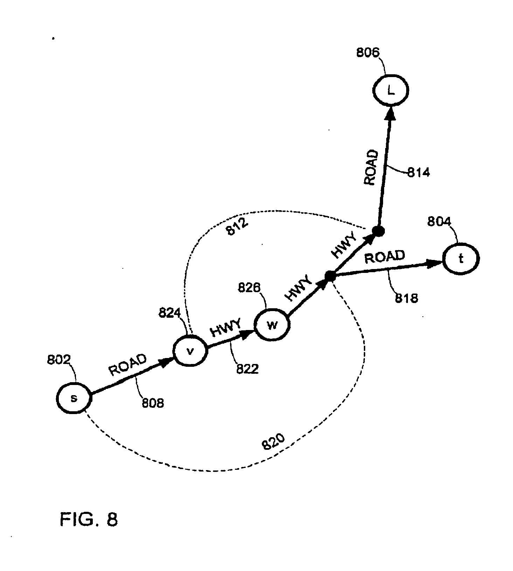

Turning attention to Figure 8, a set of vertices and edges are shown to illustrate the effectiveness of using landmarks with an A* search, as performed by embodiments of the invention. In the example, source s 802 and destination t 804 are far from each other on the map, and a landmark L 806 is approximately in the same direction from s as t is. It is likely that the shortest route from s 802 to L 806 consists of a segment 808 from s 802 to a highway, a segment 812 that uses highways only, and a segment 814 from a highway to L. Furthermore, the shortest route to t 804 follows the same segment 808 to the highway and goes on the same highway path 812 for a while, but exits earlier and takes local roads 818 to t 804. In other words, for a good choice of L 806, the shortest paths from s 802 to L 806 and t 804 share an initial segment 820. Consider an edge 822 from vertex v 824 to vertex w 826 on this segment. It is easy to see that the lower bound function given by the distances to L 806 and the triangle inequality has the property that the lower bound on the distance from v 824 to L 806 is equal to the sum of the lower bound on the distance from w 826 to L 806 and the actual weight of the edge 822 from v 824 to w 826. This is true for any two vertices on the shared path segment of the shortest path from s 802 to t 804. This ensures that these edges will be the first ones scanned. In other words, if the "reduced cost" of an edge from v 824 to w 826 is defined to be the actual weight of that edge plus the potential at v 824 minus the potential at w 826, and actual weights are replaced by reduced costs, then the problem is mathematically equivalent to Dijkstra's algorithm on the new graph if the estimates are feasible.

ALT (A* search, landmarks, and triangle inequality) algorithms use landmarks and triangle inequality to compute feasible lower bounds. A small subset of vertices is selected as landmarks and, for each vertex in the graph, distances to and from every landmark are precomputed. Consider a landmark L: if d(x,y) denotes the distance from x to y, then, by the triangle inequality, d(v, L)-d(w, L) ≤ d(v, w); similarly, d(L, w) - d(L, v) ≤ d (v, w). To get the tightest lower bound, one can take the maximum of these bounds, over all landmarks. The best lower bounds on d (v, w) are given by landmarks that appear "before" v or "after" w.

During an s-t shortest path computation, it is suggested to use only a subset of the available landmarks: those that give the highest lower bounds on the s-t distance. This tends to improve performance because most remaining landmarks are unlikely to help in this computation. Further improvements are described herein.

An ALT technique may comprise a main stage and a preprocessing stage. The main stage may be improved by using dynamic selection of active landmarks, and the preprocessing stage may be improved by using various landmark selection techniques. As described further herein, during preprocessing, the ALT algorithm selects a set of landmarks and precomputes distances between each landmark and all vertices. Then it uses these distances to compute lower bounds for an A* search-based shortest path algorithm.

In accordance with the present invention, active landmarks (those that are actually used for the current computation) may be dynamically selected. An example technique starts with the original two landmarks, and then improves on them by selecting a new landmark dynamically when this landmark gives a significantly better lower bound for the frontier of the search, compared to the currently active landmarks.

An implementation of ALT uses, for each shortest path computation, only a subset of h active landmarks, those that give the best lower bounds on the s-t distance. With this approach, the total number of landmarks is limited mostly by the amount of secondary storage available. The choice of h depends on the tradeoff between the search efficiency and the number of landmarks that have to be examined to compute a lower bound.

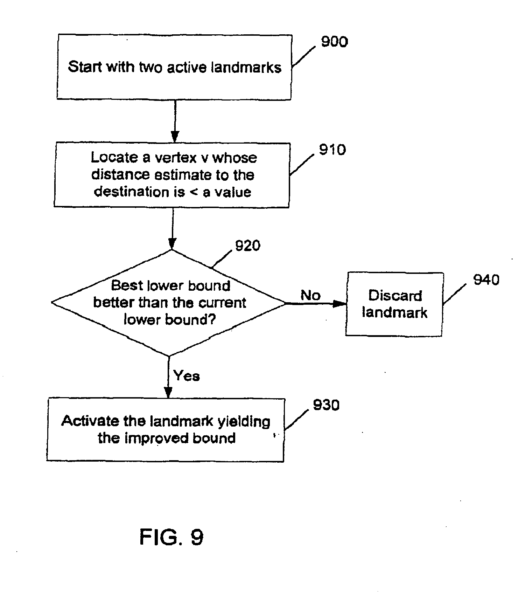

This may be improved upon by updating the set of active landmarks dynamically. A flowchart of an example method of selecting active landmarks dynamically is shown in Figure 9. An example method starts at step 900 with only two active landmarks: one that gives the best bound using distances to landmarks and another using distances from landmarks. Then, periodically at regular or irregular intervals, the active set is attempted to be updated by adding new landmarks until the algorithm terminates or the total number of active landmarks reaches an upper bound.

Update attempts happen whenever a search (forward or reverse) scans a vertex v whose distance estimate to the destination, as determined by the current lower bound function, is smaller than a certain value (checkpoint), at step 910. At this point, the algorithm verifies if the best lower bound on the distance from v to the destination (using all landmarks) is at least a factor 1 + ∈ (e.g., ∈ = 0.01) better than the current lower bound (using only active landmarks), at step 920. If so, the landmark yielding the improved bound is activated, at step 930. Otherwise, the landmark is not used, at step 940.

The computation starts using the initially best landmarks which give the best bounds on the s-t distance using distances from and to landmarks, respectively. As it progresses and the location of vertices for which lower bounds are needed changes, other landmarks may give better bounds, and should be brought to the active set. After every landmark update, at step 950, the potential function changes, and the priority queues are updated.

Checkpoints are determined by the original lower bound b on the distance between s and t, calculated before the computation starts. For example, the i-th checkpoint for each search can have value b(10-i)/10: first try to update the landmarks when estimated lower bounds reach 90% of the original value, then when they reach 80%, and so on. This rule works well when s and t are reasonably far apart; when they are close, update attempts would happen too often, thus dominating the running time of the algorithm. Therefore, it may be desired that the algorithm scan at least 100 vertices between two consecutive update attempts in the same direction.

The dynamic selection of active landmarks improves efficiency, and reduces the running time, as the final number of active landmarks is usually very small (e.g., close to three).

During preprocessing, a set of landmarks is selected and the distances between each landmark and all the vertices are precomputed. These distances are used to compute lower bounds for an A* search-based shortest path algorithm.

There are several techniques contemplated to find good landmarks to increase the overall performance of lower-bounding methods. A simple way of selecting landmarks is to select a fixed number of landmark vertices at random. This "random method" works reasonably well. Another approach is a farthest landmark selection algorithm, which works greedily: A start vertex is chosen and a vertex v1 is found that is farthest away from it. Vertex v1 is added to the set of landmarks. Vertex vi is found as the vertex which is farthest from the current set of landmarks (i.e., the vertex with maximum distance to the closest vertex in the set). Vertex vi is then added to the set of landmarks. The process repeats until the fixed number of landmarks are found. This method is called the "farthest landmark selection method".

Another method for finding good landmarks is a "planar landmark selection method." The planar landmark selection method generally produces landmarks that geometrically lie behind the destination, typically giving good bounds for road graphs and other geometric graphs (including non-planar graphs) where graph and geometric distances are strongly correlated. A simple planar landmark selection method works as follows: First, a vertex c closest to the center of the planar (or near-planar) embedding is found. The embedding is divided into a fixed number of pie-slice sectors centered at c, each containing approximately the same number of vertices. For each sector, a vertex farthest away from the center is chosen. To avoid having two landmarks close to each other, if sector A has been processed and sector B is being processed such that the landmark for A is close to the border of A and B, the vertices ofB close to the border are skipped.

The above selection rules are relatively fast. Additional landmark selection rules in accordance with embodiments of the present invention include "avoid" and "maxcover". These selection techniques do not use graph layout information, yet they work better than the conventional selection techniques. Note that one can define "optimal" landmark selection in many ways depending on how landmark quality is measured. For example, one can aim to minimize the total number of vertices visited for all O(n²) possible shortest path computations, where n is the number of vertices in the graph. Alternatively, one can minimize the maximum number of vertices visited.

One exemplary landmark selection method in accordance with the present invention is referred to as "avoid". This technique tries to identify regions of the graph that are not "well-covered" by avoiding existing landmarks. "Avoid" uses a landmark quality measure to generate a set of candidates that can be used separately or in the context of "local search". With "avoid" the weight of a vertex w(v) is determined as the difference between the actual shortest path to a particular vertex and the lower bound. The size of the vertex s(v) is then determined. This can be optimized with "local search".

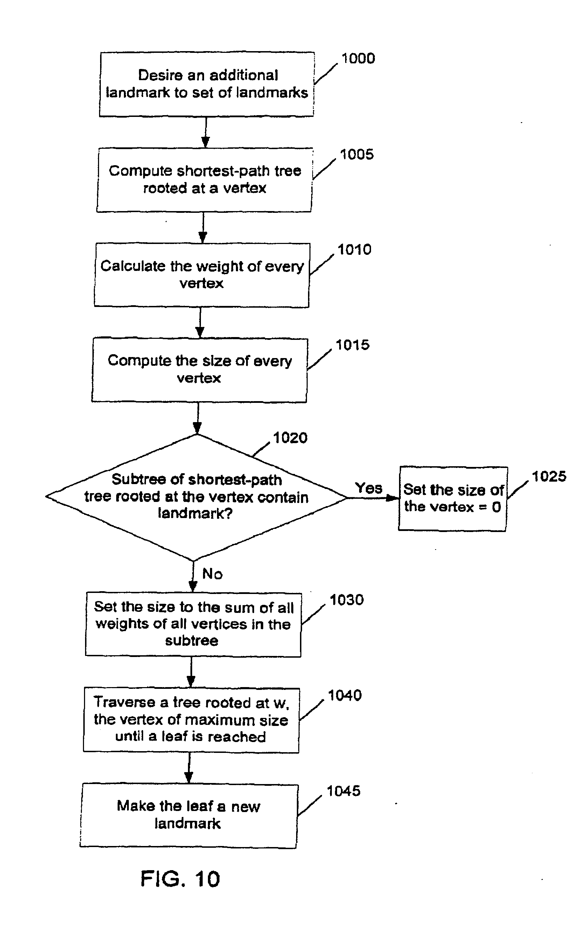

Figure 10 is a flowchart of an example landmark selection method in accordance with the present invention. For example, assume at step 1000 there is a set S of landmarks already selected and that an additional landmark is desired. At step 1005, compute a shortest-path tree Tr rooted at some vertex r. Then calculate, for every vertex v, its weight, defined as the difference between dist(r, v) and the lower bound for dist(r, v) given by S, at step 1010. This is a measure of how bad the current distance estimates are.

For every vertex v, at step 1015, compute its size s(v), which depends on Tv, the subtree of Tr rooted at v. If Tv contains a landmark at step 1020, set s(v) = 0 at step 1025; otherwise, s(v) is the sum of the weights of all vertices in Tv at step 1030. Let w be the vertex of maximum size. Traverse Tw at step 1040, starting from w and always following the child with the largest size, until a leaf is reached. Make this leaf a new landmark, at step 1045.

Thus, there is no path from w to a vertex in its subtree that has a landmark "behind" it. By adding a leaf of this tree to the set of landmarks, avoid tries to improve the coverage.

A downside of constructive heuristics, such as the ones described above, is that some landmarks selected earlier on might be of limited usefulness once others are selected. It is desirable to try to replace them with better ones. "Local search" may be used for this purpose. To implement the search, it is desirable to measure how good a solution (i.e., a set of landmarks) is. Ultimately, the goal is to find a solution that makes all point-to-point searches more efficient, but that is prohibitively expensive. In practice, the quality of a given set of landmarks is estimated.

Reduced costs may be used for the estimation. In this context, define the reduced cost of an arc with respect to landmark L as ℓ(v, w) - d(L, w) + d(L, v), where ℓ(v, w) denotes the length of the arc (v,w). If the reduced cost is zero, then the landmark covers the arc. The best case for the point-to-point shortest path algorithm happens when a landmark covers every arc on the path. With that in mind, define the cost of a given solution as the number of arcs that have zero reduced cost with respect to at least one landmark. Less costly solutions are better: for a fixed k, it is desirable to find a set of k landmarks that covers as many arcs as possible.

Determining which arcs a given vertex covers requires performing a single-source shortest path computation. For large graphs, it is impractical to do this for all vertices. Therefore, use a small set of candidate landmarks that have been selected using "avoid".

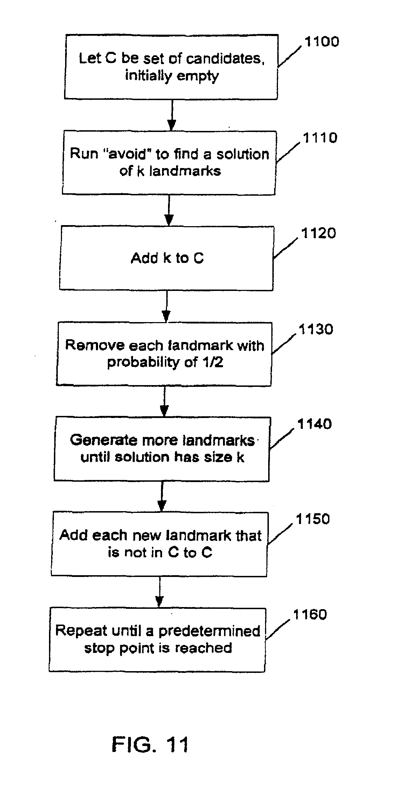

More precisely, with respect to Figure 11, let C be the set of candidates, initially empty, at step 1100. Start by running "avoid" to find a solution with k landmarks at step 1110, all of which are added to C at step 1120. Then remove each landmark from the current solution with probability ½, at step 1130. Once they are removed, generate more landmarks (also using "avoid") until the solution has size k again, at step 1140. Each new landmark that is not already in C is added to it, at step 1150. This process is repeated, at step 1160, until either C has size 4k or "avoid" is executed 5k times, for example (whichever happens first). It is desirable to limit the running time of the algorithm because not every execution of avoid will generate a new landmark.

Eventually, a set C will be heuristically obtained with between k and 4k candidate landmarks. Interpreting each landmark as the set of arcs that it covers, it is desirable to solve an instance of the maximum cover problem. A multistart heuristic may be used to find an approximate solution; finding the exact solution is difficult because the problem is NP-hard. Each iteration starts with a random subset S of C with k landmarks and applies a local search procedure to it. The quality of the set is determined. In the end, pick the best solution obtained across all iterations. For example, set the number of iterations to log₂ k+1.

The local search tries to replace one landmark that belongs to the current solution with another that does not, but belongs to the candidate set. It works by computing the profit associated with each of the O(k²) possible swaps. It discards those whose profit is negative or zero. Among the ones that remain, it picks a swap at random with probability proportional to the profit. The same procedure is then applied to the new solution. The local search stops when it reaches a local optimum, i.e., a solution on which no improving swap can be made. Each iteration of the local search takes O(km) time. This method of landmark generation is referred to as "maxcover". The optimization phase is quite fast. The running time is dominated by calls to "avoid" used to generate the set of candidate landmarks.

A memory efficient implementation of the ALT algorithm is described. Space-efficient data structures are used in combination with caching, data compression, and hashing. Such a technique may be used on a Pocket PC with graph and landmark data stored in flash memory, and has been used on several road networks, including one of North America with almost 30 million vertices.

An example implementation stores graph and landmark data on a flash memory card. System constraints dictate the minimum amount one can read from the card (e.g., a 512-byte sector). Data is read in pages, with a page containing one or more sectors.

The graph may be stored in the flash card in the following format. Arcs are represented as an array of records sorted by the arc tail. Each record has a 16-bit arc length (e.g., transit time in seconds) and the 32-bit ID of the head vertex. Another array represents vertex records, each comprising the 32-bit index of the record representing the first outgoing arc. The reverse graph is also stored (in the same format).

Additional information needed for each vertex visited by a search is kept in main memory in a record referred to as a mutable node. Each vertex may need two mutable nodes, one for the forward and another for the reverse search. A mutable node contains four 32-bit fields: an ID, a distance label, a parent pointer, and a heap position. Some fields are bigger than needed even for the largest graph that is likely to come up in a road network application, but it may be desirable to make the records word aligned to keep the implementation clean and flexible. The user specifies M, the maximum number of mutable nodes allowed. The total amount of RAM used is proportional to M.

To map vertex IDs to the corresponding mutable nodes, use double hashing with a table of size at least 1.5M. Maintain two priority queues, one for each search. For shortest path algorithms, a multi-level bucket implementation tends to be the fastest. For P2P computations, 4-heaps may be desirable. Although slower than multi-level buckets, 4-heaps have less space overhead (one heap index per vertex). In addition, the priority queue generally does not contain too many elements in the application, so the overhead associated with heap operations is modest compared to that of data access. The maximum size of each heap was set to M/8 + 100 elements in the prototype implementation.

The data may have strong locality. For this reason, and also because data is read in blocks, the algorithm implements an explicit caching mechanism. A page allocation table maps physical page addresses to virtual page addresses (in RAM), and the replacement strategy is LRU: the least recently used page is evicted whenever desired. Separate caches are used for graphs and landmarks. Each of the six landmark caches (one for each active landmark) has 1 MB, and each of the two graph caches has 2 MB.

Data is stored for each landmark in a separate file. Each distance is represented by a 32-bit integer. To and from distances for the same vertex are adjacent. Although the graph is not completely symmetric, the two distances are usually close. Moreover, because vertices with similar IDs tend to be close to each other, their distances to (or from) the landmark are also similar. This similarity is desirable for compression, which allows more data to fit in the flash card and speeds up data read operations.

A compression ratio of almost 50% may be achieved because the two most significant bytes of adjacent words (distances) tend to be the same. To allow random access to the file, each page is compressed separately. Since compression rates vary, the file has a directory with page offsets.

Thus, the techniques of the present invention visit fewer vertices (because of higher efficiency) than those of the prior art, but also processes each one faster (because the number of active landmarks is reduced with dynamic selection).

The various systems, methods, and techniques described herein may be implemented with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computer will generally include a processor, a storage medium readable by the processor (including volatile and non-volatile memory and/or storage elements), at least one input device, and at least one output device. One or more programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, the machine becomes an apparatus for practicing the invention. When implemented on a general-purpose processor, the program code combines with the processor to provide a unique apparatus that operates to perform the functionality of the present invention.

## Claims

1. A method of finding a shortest path from a starting location to a destination location among a set of locations, comprising:
selecting a set of landmarks;
computing distances between each landmark and locations within the set of locations;
computing lower bounds based on the distances; and
running an A* process based on the lower bounds to determine the shortest path.

2. The method of claim 1, wherein selecting the set of landmarks comprises selecting the set of landmarks using an avoid landmark selection method.

3. The method of claim 2, further comprising optimizing the avoid landmark selection method using a local search method.

4. The method of claim 1, wherein selecting the set of landmarks comprises selecting the set of landmarks using a maxcover selection method.

5. The method of claim 1, wherein the A* process uses active landmarks.

6. The method of claim 5, further comprising dynamically selecting the active landmarks.

7. The method of claim 6, wherein dynamically selecting the active landmarks comprises:
determining whether the best lower bound on the distance from a landmark to a destination location is at least a predetermined factor better than a current lower bound; and
if so, activating the landmark.

8. The method of claim 1, wherein the step of selecting a set of landmarks comprises:
determining the sizes of a plurality of vertices corresponding to a plurality of locations;
traversing a first tree graph starting from the vertex having the largest size and following a child with the largest size, until a leaf is reached; and
activating the leaf as a landmark.

9. The method of claim 8, further comprising determining a second tree graph rooted at a vertex, and determining the weight of every vertex in the second tree graph, prior to determining the sizes of the plurality of vertices.

10. The method of claim 9, wherein determining the weight of each vertex comprises determining the difference between the actual shortest path and the lowest bound on the second tree graph.

11. The method of claim 9, wherein the sizes of the plurality of vertices is based on a subtree of the second tree graph rooted at the vertex whose size is being determined.

12. The method of claim 8, further comprising performing a local search on the landmark.

13. The method of claim 1, wherein the step of selecting a set of landmarks comprises:
(a) determining a plurality of landmarks;
(b) adding the landmarks to a set of candidates;
(c) discarding the landmarks having a predetermined probability;
(d) generating additional landmarks;
(e) adding the additional landmarks that are not already in the set to the set of candidates; and
(f) repeating steps (c) - (e) until a predetermined condition is met.

14. The method of claim 13, wherein steps (a) and (d) comprises using an avoid landmark selection process.

15. The method of claim 13, wherein the predetermined probability is ½.

16. The method of claim 13, wherein the predetermined condition is one of the set of candidates reaches a predetermined size and step (d) is executed a predetermined number of times.

17. The method of claim 13, further comprising (g) executing a maxcover selection process using the set of candidate landmarks.

## Patentansprüche

1. Verfahren zum Auffinden eines kürzesten Weges von einem Startort zu einem Zielort unter einer Menge von Orten, umfassend:
Auswählen einer Menge von Geländemarken;
Berechnen von Abständen zwischen jeder Geländemarke und Orten innerhalb der Menge von Orten;
Berechnen von unteren Schranken auf Grundlage der Abstände; und
Ausführen eines A*-Prozesses auf Grundlage der unteren Schranken zum Bestimmen des kürzesten Weges.

2. Verfahren nach Anspruch 1, wobei das Auswählen der Menge von Geländemarken ein Auswählen der Menge von Geländemarken unter Verwendung eines Avoid-Geländemarkenauswahlverfahrens umfasst.

3. Verfahren nach Anspruch 2, des Weiteren umfassend ein Optimieren des Avoid-Geländemarkenauswahlverfahrens unter Verwendung eines lokalen Suchverfahrens.

4. Verfahren nach Anspruch 1, wobei das Auswählen der Menge von Geländemarken ein Auswählen der Menge von Geländemarken unter Verwendung eines Maxcover-Auswahlverfahrens umfasst.

5. Verfahren nach Anspruch 1, wobei der A*-Prozess aktive Geländemarken verwendet.

6. Verfahren nach Anspruch 5, des Weiteren umfassend ein dynamisches Auswählen der aktiven Geländemarken.

7. Verfahren nach Anspruch 6, wobei das dynamische Auswählen der aktiven Geländemarken umfasst:
Bestimmen, ob die beste untere Schranke für den Abstand von einer Geländemarke zu einem Zielort wenigstens um einen vorbestimmten Faktor besser als eine aktuelle untere Schranke ist; und,
wenn dem so ist, Aktivieren der Geländemarke.

8. Verfahren nach Anspruch 1, wobei der Schritt des Auswählens einer Menge von Geländemarken umfasst:
Bestimmen der Größen einer Mehrzahl von Vertices entsprechend einer Mehrzahl von Orten;
Durchlaufen eines ersten Baumgraphen beginnend bei dem Vertex mit der größten Größe und folgend einem Nachfolger mit der größten Größe bis zum Erreichen eines Blattes; und
Aktivieren des Blattes als Geländemarke.

9. Verfahren nach Anspruch 8, des Weiteren umfassend ein Bestimmen eines zweiten Baumgraphen mit einer Verwurzelung an einem Vertex und Bestimmen der Gewichtung jedes Vertex in dem zweiten Baumgraphen vor dem Bestimmen der Größen der Mehrzahl von Vertices.

10. Verfahren nach Anspruch 9, wobei das Bestimmen der Gewichtung jedes Vertex ein Bestimmen der Differenz zwischen dem tatsächlichen kürzesten Weg und der untersten Schranke für den zweiten Baumgraphen umfasst.

11. Verfahren nach Anspruch 9, wobei die Größen der Mehrzahl von Vertices auf einem Unterbaum des zweiten Baumgraphen mit einer Verwurzelung an dem Vertex, dessen Größe bestimmt wird, basieren.

12. Verfahren nach Anspruch 8, des Weiteren umfassend ein Durchführen einer lokalen Suche an der Geländemarke.

13. Verfahren nach Anspruch 1, wobei der Schritt des Auswählens einer Menge von Geländemarken umfasst:
(a) Bestimmen einer Mehrzahl von Geländemarken;
(b) Hinzufügen der Geländemarken zu einer Menge von Kandidaten;
(c) Aussondern der Geländemarken mit einer vorbestimmten Wahrscheinlichkeit;
(d) Erzeugen zusätzlicher Geländemarken;
(e) Hinzufügen der zusätzlichen Geländemarken, die nicht bereits in der Menge sind, zu der Menge von Kandidaten; und
(f) Wiederholen von Schritten (c) bis (e), bis eine vorbestimmte Bedingung erfüllt ist.

14. Verfahren nach Anspruch 13, wobei Schritte (a) und (d) die Verwendung eines Avoid-Geländemarkenauswahlprozesses umfassen.

15. Verfahren nach Anspruch 13, wobei die vorbestimmte Wahrscheinlichkeit gleich 1/2 ist.

16. Verfahren nach Anspruch 13, wobei die vorbestimmte Bedingung entweder "Die Menge von Kandidaten erreicht eine vorbestimmte Größe" oder "Schritt (d) wird eine vorbestimmte Anzahl von Malen ausgeführt" ist.

17. Verfahren nach Anspruch 13, des Weiteren umfassend (g) ein Ausführen eines Maxcover-Auswahlprozesses unter Verwendung der Menge von Kandidatengeländemarken.

## Revendications

1. Procédé pour trouver l'itinéraire le plus court pour aller d'un endroit de départ à un endroit de destination parmi une série d'endroits, comprenant :
la sélection d'une série de points de repère ;
le calcul des distances entre chaque point de repère et les endroits compris dans ladite série d'endroits ;
le calcul de limites inférieures sur la base des distances ; et
l'exécution d'un traitement A* sur la base des limites inférieures, pour déterminer l'itinéraire le plus court.

2. Procédé de la revendication 1, selon lequel la sélection de la série de points de repère comprend la sélection de la série de points de repères à l'aide d'un procédé de sélection de points de repère par évitement.

3. Procédé de la revendication 2, comprenant par ailleurs l'optimisation du procédé de sélection de points de repère par évitement à l'aide d'un procédé de recherche locale.

4. Procédé de la revendication 1, selon lequel la sélection de la série de points de repère comprend la sélection de la série de points de repère à l'aide d'un procédé de sélection maxcover.

5. Procédé selon la revendication 1, selon lequel le traitement A* utilise des points de repère actifs.

6. Procédé de la revendication 5, comprenant par ailleurs une sélection dynamique des points de repère actifs.

7. Procédé de la revendication 6, selon lequel la sélection dynamique des points de repère actifs comprend les étapes qui consistent :
à déterminer si la meilleure limite inférieure sur la distance entre un point de repère et un endroit de destination est au moins un facteur prédéterminé meilleur qu'une limite inférieure actuelle ; et
si oui, à activer le point de repère.

8. Procédé de la revendication 1, selon lequel l'étape de la sélection d'une série de points de repère comprend :
la détermination des tailles de plusieurs noeuds correspondant à plusieurs endroits ;
le parcours d'un premier graphique arborescent en partant du noeud présentant la taille la plus grande et à suivre un noeud successeur de la taille la plus grande, jusqu'à ce qu'un noeud terminal soit atteint ; et
l'activation du noeud terminal comme point de repère.

9. Procédé de la revendication 8, comprenant par ailleurs la détermination d'un second graphique arborescent qui part d'un noeud, et la détermination du poids de chaque noeud dans le second graphique arborescent, avant de déterminer les tailles des noeuds.

10. Procédé de la revendication 9, selon lequel la détermination du poids de chaque noeud comprend la détermination de la différence entre l'itinéraire le plus court réel et la limite la plus basse sur le second arbre arborescent.

11. Procédé de la revendication 9, selon lequel les tailles des noeuds sont basées sur un sous-arbre du second graphique arborescent qui part du noeud dont la taille est en cours de détermination.

12. Procédé de la revendication 8, comprenant par ailleurs l'exécution d'une recherche locale sur le point de repère.

13. Procédé de la revendication 1, selon lequel l'étape de la sélection d'une série de points de repère comprend :
(a) la détermination de plusieurs points de repère ;
(b) l'ajout des points de repère à une série de candidats ;
(c) le renoncement aux points de repère qui ont une probabilité prédéterminée ;
(d) la production de points de repère supplémentaires ;
(e) l'ajout, à la série de candidats, des points de repère supplémentaires qui ne sont pas déjà dans la série ;
(f) et la reprise des étapes (c)-(e) jusqu'à ce qu'une condition prédéterminée soit remplie.

14. Procédé de la revendication 13, selon lequel les étapes (a) et (d) comprennent l'utilisation d'un procédé de sélection de points de repère par évitement.

15. Procédé de la revendication 13, selon lequel la probabilité prédéterminée est de ½.

16. Procédé de la revendication 13, selon lequel la condition prédéterminée est que la série de candidats atteigne une taille prédéterminée ou que l'étape (d) soit exécutée un nombre de fois prédéterminé.

17. Procédé de la revendication 13, comprenant par ailleurs le fait que (g) exécute un procédé de sélection maxcover à l'aide de la série de points de repère candidats.
